# EUROPEAN PATENT SPECIFICATION

(11) **EP 0 576 276 B1**
(45) Date of publication and mention of the grant of the patent: **12.03.1997**
(21) Application number: 93304918.1
(22) Date of filing: 23.06.1993
(51) Int. Cl.: G07F 7/00, F16K 29/00

(54) **Prepayment water supply system**
System zur vorbezahlten Wasserlieferung
Système de fourniture d'eau à prépaiement

(30) Priority: 26.06.1992 GB 9213635; 08.10.1992 GB 9221137
(43) Date of publication of application: 29.12.1993
(73) Proprietor: SCHLUMBERGER INDUSTRIES LIMITED, Farnborough Hampshire, GU14 7PW (GB)
(72) Inventor: Pattinson, Neville, Nr Ipswich, Suffolk (GB); Bark, Stephen, Nr Woodbridge, Suffolk (GB)
(74) Representative: Stoole, Brian David

(56) References cited:
- FR-A- 2 665 504
- GB-A- 2 153 573
- GB-A- 2 191 622
- GB-A- 2 191 883
- GB-A- 2 208 955

## Description

This invention relates to prepayment water supply systems, and is more particularly but not exclusively concerned with prepayment water metering systems based upon the prepayment systems disclosed in our United Kingdom Patents Nos. 2 153 573 and 2 191 622.

The prepayment systems described in our United Kingdom Patent Nos 2 153 573 and 2 191 622 allow access to a metered commodity, and comprise a prepayment token in the form of key having a memory, a receptacle for the key (the receptacle typically forming part of a meter arranged to meter the commodity), and a circuit (also typically forming part of the meter) for allowing access to the commodity only when authorised by predetermined data read from the key memory. The data in the key memory is typically entered into the memory by inserting the key into a receptacle in a vending machine, typically located at the commodity supplier's premises, the machine then entering the data in return for payment, eg via a coin or bank note accepting unit forming part of the machine. The data typically includes credit data representative of the monetary amount paid, and data representative of tariff information and one or more unique identification codes. In use, the circuit in the meter reads the data from the key, and permits the supply of the commodity to continue until the credit represented by the credit data is exhausted, at which point it discontinues the supply.

It is an object of the present invention to render the systems of the preceding paragraph particularly suitable for water metering.

A prepayment water supply system is disclosed in FR-A-2 665 504, and comprises an electrically-operable valve for controlling the water supply, and a prepayment unit which controls the valve in dependence upon credit on a token, typically a magnetic card, inserted into the prepayment unit. Upon each charging of the prepayment unit with fresh credit, the valve is operated intermittently, to descale it.

According to the present invention, there is provided a prepayment water supply system comprising a prepayment token having a memory, and supply control means including an electrically-operable valve for controlling the supply of the water, a receptacle for receiving the token, and a circuit coupled to the receptacle and to the valve and responsive to credit data read from the token memory to close the valve when an amount of water or a time period determined by said credit data has been supplied or has elapsed, characterised in that the circuit is operative when the valve has remained in one of its states for more than a given amount of time to send a pair of signals to respectively switch the valve to its other state and substantially immediately switch it back to said one state, and further characterised in that the supply control means includes a meter for metering the water, and the circuit is further operative to send such a pair of signals in response to the detection by the meter of a predetermined non-zero flow when the valve is closed or supposed to be closed.

The circuit preferably includes means for storing a signal representative of such detection as an indication of possible fraud, and subsequent such pairs of signals are preferably sent at preselected time intervals if said flow continues to be detected (rather than in direct response to subsequent detections of the flow).

Conveniently, such a pair of signals is typically sent if the valve remains in one state for more than seven days.

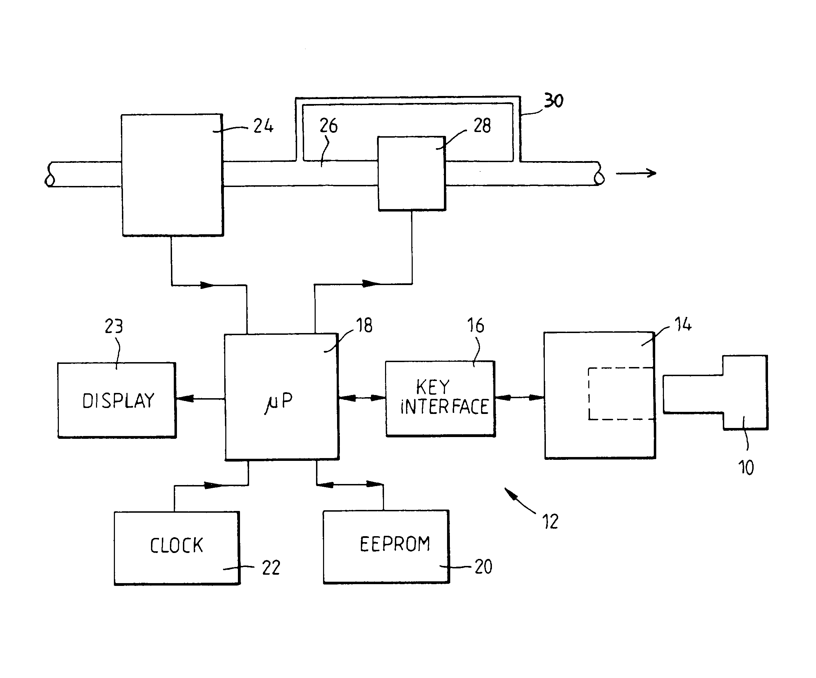

The invention will now be described, by way of example only, with reference to the accompanying drawing, which is a simplified block diagram of a prepayment water metering system in accordance with the present invention.

The prepayment water metering system shown in the drawing is intended for installation in a water consumer's premises, and is closely based on the system described in our United Kingdom Patent No. 2 191 622 (which was in turn a development of the system described in our United Kingdom Patent No. 2 153 573).

Thus the system comprises a key 10, known as a customer key, containing a non-volatile memory such as an EEPROM, and a prepayment unit 12 having a receptacle 14 for receiving the key 10. The physical form of the key 10 and the receptacle 12 can be as described in our United Kingdom Patent No. 2 191 883.

Associated with the receptacle 14, within the unit 12, is a key interface circuit 16 coupled to a microprocessor 18. The microprocessor 18 is coupled in turn to another non-volatile memory 20 in the form of an EEPROM, to a clock 22 and to a display 23, all forming part of the unit 12. The microprocessor 18 is also coupled to a flow meter 24 connected in the main water inlet pipe 26 to the consumer's premises, and to a solenoid-operated valve 28 also connected in the pipe 26. The meter 24 and the valve 28 are preferably mounted in a common housing (not shown), and are connected to the unit 12 via an electrical cable.

The system operates substantially as described in our United Kingdom Patents Nos. 2 153 574 and 2 191 622. In particular, the consumer takes the key 10 to a vending machine, typically located in or at a post office or other readily accessible premises, and inserts the key 10 into a receptacle, similar to the receptacle 14, in the machine. The consumer then inserts coins or bank notes into the machine, which, having read the key memory, responds by writing credit data representative of the amount of credit purchased into the key memory, along with tariff data representative of the current water supply tariff or tariffs and pass number data indicative of how many times the key has been used. The key memory typically already contains identification data uniquely identifying the key, the meter or prepayment unit with which it is to be used and the consumer, all of which identification data was entered when the key 10 was first issued to the consumer.

Having charged the key 10 with credit, the consumer returns home and inserts the key into the receptacle 14. This causes the microprocessor 18 to read the contents of the key memory, to perform checks to see if these contents indicate a valid key as described in United Kingdom Patent No. 2 153 173, and if they do, to write them into the memory 20. The microprocessor 18 also writes the current reading or readings of the meter 24, which are stored in the memory 20, along with the time and date to which the readings relate, into the key memory, substantially as described in United Kingdom Patent No 2 191 622.

One difference between the system of the present invention and the system of our earlier United Kingdom Patents Nos. 2 153 573 and 2 191 622 (aside from the storage of monetary credit and tariff information in the key memory rather than an amount of water purchased) lies in what happens when the credit entered into the unit 12 is exhausted.

In systems so far manufactured and sold by the Applicant under the aforementioned patents, which systems have primarily been for use in connection with the supply of electricity, the supply of electricity is discontinued when the credit entered into the unit 12 is exhausted (although an emergency supply facility, allowing access to a predetermined amount of electricity or providing a predetermined amount of credit, is always incorporated). However, where the commodity being supplied is water, a complete discontinuance of the supply could perhaps have adverse health implications. In the system shown in the drawing, therefore, a small by-pass conduit 30, capable of permitting a flow of about two litres per hour, is arranged in parallel with the valve 28. This flow is sufficient to provide drinking water and to fill lavatory cisterns (albeit rather slowly), but is nevertheless sufficiently inconvenient as to provide a powerful incentive to the consumer to purchase fresh credit by way of the key 10.

However, the main difference between the system of the present invention and those of our earlier patents lies in the programming of the microprocessor 18. Thus the microprocessor 18 is additionally programmed to periodically produce, in the period after the closure of the valve 28 and before the insertion of a key 10 containing fresh credit (ie the period when the valve is closed or supposed to be closed), a pair of signals which respectively re-open and then substantially immediately re-close the valve, typically at predetermined time intervals. This tends to ensure that the valve 28 does not become stuck in its closed state when that closed state would otherwise be of prolonged duration, eg more than seven days.

The microprocessor 18 is further programmed to produce such a pair of signals in response to the production by the meter 24 of a predetermined number of flow pulses in a given time, indicating a predetermined non-zero flow, during the aforementioned period when the valve 28 is closed or supposed to be closed, since such pulse production is an indication that the valve may have been fraudulently caused to re-open (ie without the insertion of a key 10 containing fresh credit).

The predetermined non-zero flow is selected to be just above the maximum flow which can pass through the by-pass conduit 30, since it will be appreciated that the by-pass flow is in fact metered by the meter 24. Subsequently such pairs of signals are preferably produced by the microprocessor 18 at predetermined time intervals rather than in response to the subsequent production by the meter 24 of another set of the predetermined number of flow pulses, since this enables the number of such pairs of signals to be kept to a predetermined, relatively low level, thus avoiding excessive power consumption where the unit 12 is battery powered (as is normally the case in a water metering context).

When the microprocessor 18 detects the existence of the predetermined non-zero flow in the circumstances outlined above, it additionally produces and stores in the EEPROM 20 a signal indicating a possible fraud.

Finally, the microprocessor 18 is also programmed such that, if the valve 28 remains in its open state for more than seven days, the microprocessor sends a pair of signals which respectively close it and then substantially immediately re-open it, so reducing the possibility of the valve sticking in its open state.

Many modifications can be made to the described embodiment of the invention. For example, the by-pass conduit 30 can be replaced by a conduit formed in the body of the valve 28, or even in the valve closure member of the valve 28. Alternatively, the by-pass conduit 30 can by-pass the meter 24 as well as the valve 28, in which case the predetermined non-zero flow which the microprocessor 18 is programmed to detect can be lower, ie close to zero. In the limit, the by-pass conduit 30 can be omitted altogether, especially if a relatively long duration emergency facility is provided.

Additionally, the key 10 need not have the physical form of a key, but can instead be constituted for example by a so-called "smart card" or by a magnetic card. And finally, the water supply can be pre-paid for on a timed basis, rather than on a metered basis (ie a given amount of credit permits supply for say a week or a month). In this case, the metering function can still be retained, with the clock 22 and the microprocessor 18 serving additionally to provide the necessary timing function, and with the meter readings still being entered in the key 10 along with time and date information. However, in the limit, the metering function can be omitted altogether, eg by omitting the flow meter 24. But even in this case, it may still be desired to store information generated in or by the consumer's part of the system in the key 10, eg the aforementioned signal stored in the EEPROM 20 and indicating a possible fraud.

## Claims

1. A prepayment water supply system comprising a prepayment token (10) having a memory, and supply control means (12) including an electrically-operable valve (28) for controlling the supply of the water, a receptacle (14) for receiving the token (10), and a circuit (16,18) coupled to the receptacle (14) and to the valve (28) and responsive to credit data read from the token memory to close the valve (28) when an amount of water or a time period determined by said credit data has been supplied or has elapsed, characterised in that the circuit (16, 18) is operative when the valve (28) has remained in one of its states for more than a given amount of time to send a pair of signals to respectively switch the valve (28) to its other state and substantially immediately switch it back to said one state, and further characterised in that the supply control means (12) includes a meter (24) for metering the water, and the circuit (16, 18) is further operative to send such a pair of signals in response to the detection by the meter (24) of a predetermined non-zero flow when the valve (28) is closed or supposed to be closed.

2. A system as claimed in claim 1, wherein the circuit (16, 18) includes means (20) for storing a signal representative of such detection as an indication of possible fraud.

3. A system as claimed in claim 1 or claim 2, wherein subsequent such pairs of signals are sent at preselected time intervals if said flow continues to be detected.

4. A system as claimed in any preceding claim, wherein such a pair of signals is sent if the valve (28) remains in either state for more than seven days.

## Patentansprüche

1. System zur vorausbezahlten Wasserlieferung mit einer Vorausbezahlungsmarke (10), die einen Speicher hat, und Lieferungssteuermitteln (12), zu denen ein elektrisch betätigbares Ventil (28) zur Steuerung der Wasserlieferung, eine Aufnahme (14) für die Marke (10) und eine Schaltung (16, 18) gehören, die mit der Aufnahme (14) und dem Ventil (28) verbunden ist und auf von dem Speicher der Marke abgelesene Kreditdaten anspricht, um das Ventil (28) zu schließen, wenn eine durch die Kreditdaten bestimmte Wassermenge oder Zeitdauer geliefert worden ist bzw. abgelaufen ist, dadurch gekennzeichnet, daß die Schaltung (16, 18) dann, wenn das Ventil (28) für mehr als eine vorgegebene Zeitdauer in einem seiner Zustände geblieben ist, tätig wird, um ein Signalpaar auszusenden, um das Ventil (28) in seinen anderen Zustand umzuschalten und es im wesentlichen unmittelbar darauf in den einen Zustand zurückzuschalten, und ferner dadurch gekennzeichnet, daß die Lieferungssteuermittel (12) ein Meßgerät (24) zur Wassermessung enthalten und daß die Schaltung (16, 18) ferner tätig wird, um ein solches Signalpaar als Antwort darauf auszusenden, daß das Meßgerät (24) eine vorbestimmte, von Null verschiedene Strömung feststellt, wenn das Ventil (28) geschlossen ist oder geschlossen sein soll.

2. System nach Anspruch 1, bei dem die Schaltung (16, 18) Mittel (20) zur Speicherung eines eine solche Feststellung darstellenden Signals als Anzeichen für einen möglichen Betrug enthält.

3. System nach Anspruch 1 oder 2, bei dem nachfolgend solche Signalpaare in vorbestimmten Zeitabständen gesendet werden, wenn die Strömung weiterhin festgestellt wird.

4. System nach einem der vorhergehenden Ansprüche, bei dem ein solches Signalpaar gesendet wird, wenn das Ventil (28) für mehr als sieben Tage in dem einen oder in dem anderen Zustand bleibt.

## Revendications

1. Système d'alimentation en eau à prépaiement comprenant un jeton (10) de prépaiement ayant une mémoire, et un moyen (12) de commande d'alimentation comportant une vanne (28) pouvant être actionnée électriquement pour commander l'alimentation en eau, un réceptacle (14) destiné à recevoir le jeton (10) et un circuit (16, 18) relié au réceptacle (14) et à la vanne (28) et sensible à des données de crédit lues dans la mémoire du jeton pour fermer la vanne (28) lorsqu'une quantité d'eau ou un temps déterminés par lesdites données de crédit a été fournie, ou s'est écoulé, caractérisé en ce que le circuit (16, 18) est activé lorsque la vanne (28) est restée dans l'une de ses positions pendant plus d'un certain temps pour émettre un couple de signaux respectivement afin de faire commuter la vanne (28) dans son autre position et sensiblement immédiatement après de la faire revenir dans ladite première position, et étant également caractérisé en ce que le moyen de commande d'alimentation (12) comprend un compteur (24) pour le comptage de l'eau, et le circuit (16, 18) est également activé pour émettre un couple de signaux en réponse à la détection par le compteur (24) d'un écoulement prédéterminé non nul lorsque la vanne (28) est fermée ou supposée être fermée.

2. Système selon la revendication 1, dans lequel le circuit (16, 18) comprend des moyens (20) de stockage d'un signal représentatif d'une telle détection en tant qu'indication d'une éventuelle fraude.

3. Système selon la revendication 1 ou la revendication 2, dans lequel d'autres couples de signaux analogues sont émis suivant des intervalles de temps prédéterminés si l'écoulement continue d'être détecté.

4. Système selon l'une des revendications précédentes, dans lequel un tel couple de signaux est émis si la vanne (28) reste dans l'une de ses positions pendant plus de sept jours.
